# EUROPÄISCHE PATENTSCHRIFT

(11) **EP 3 390 168 B1**
(45) Veröffentlichungstag und Bekanntmachung des Hinweises auf die Patenterteilung: **02.03.2022**
(21) Anmeldenummer: 16750797.9
(22) Anmeldetag: 08.08.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISER UN VÉHICULE À MOTEUR

(30) Priorität: 18.12.2015 DE 102015016552
(43) Veröffentlichungstag der Anmeldung: 24.10.2018
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/068884
(87) Internationale Veröffentlichungsnummer: WO 2017/102104

(56) Entgegenhaltungen:
- EP-A2- 0 867 971
- WO-A1-2009/143415
- WO-A1-2015/084852
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei- oder vierrädriges Kraftfahrzeug.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

Dieses bekannte Verfahren wird erfindungsgemäß durch die folgenden Schritte weitergebildet.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, unter Verwendung eines winkelauflösenden Magnetfeldsensors

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, unter Verwendung des winkelauflösenden Magnetfeldsensors.

In einem fünften Schritt ermittelt ein erster Rechner, ein Rechner im Identifikationsgeber, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals und in einem sechsten Schritt sendet der Identifikationsgeber nur dann ein Autorisierungssignal zur Autorisierung der Nutzung des Kraftfahrzeugs an das Kraftfahrzeug, wenn der ermittelte Winkel einen vorbestimmten Schwellenwert überschreitet.

Zusammenfassend kann durch das erfindungsgemäße Verfahren mithilfe von mindestens zwei räumlich separierten bzw. beabstandeten Sendern die Position des Empfängers bzw. des Identifikationsgebers winkelaufgelöst bestimmt werden. Werden die Signale der beabstandeten Sender in manipulativer Absicht durch einen Repeater weitergeleitet wird die Laufzeit verlängert und die Winkelinformation geht verloren. Das erfindungsgemäße winkelauflösende Verfahren erkennt eine solche Manipulation der Funkstrecke indem die Parallelität der Signale von dem Identifikationsgeber erkannt wird und dieser die Aussendung eines Autorisierungssignals verhindert.

Bei der Ausgestaltung des erfindungsgemäßen Verfahrens ist vorgesehen, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird. Durch die vorstehenden Maßnahmen lässt sich eine besonders zuverlässige Ermittlung des Winkels und damit eine besonders zuverlässige Bestimmung, ob der vorbestimmte Schwellenwert überschritten wird, erreichen.

Entsprechend einer weiteren Ausführungsform des erfindungsgemäßen Verfahrens weist das Kraftfahrzeug eine weitere, dritte Antenne auf, die von der ersten und der zweiten Antenne jeweils räumlich beabstandet ist und dass in analoger bzw. gleicher Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Durch diese Maßnahmen kann die Zuverlässigkeit bei der Ermittlung des Winkels und damit die Bestimmung, ob der vorbestimmte Schwellenwert überschritten wird, weiter erhöht werden.

Bei der Ausgestaltung des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Entsprechend einer vorteilhaften Weiterbildung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind. Weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Bei einer Ausgestaltung des erfindungsgemäßen Verfahrens sind die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems. Durch die vorstehenden Maßnahmen kann eine besonders zuverlässige Bestimmung des Winkels zwischen den ermittelten räumlichen Komponenten des ersten elektromagnetischen Feldes des empfangenen ersten Signals und der ermittelten räumlichen Komponenten des zweiten elektromagnetischen Feldes des empfangenen zweiten Signals und/oder zwischen den ermittelten räumlichen Komponenten des dritten elektromagnetischen Feldes des empfangenen dritten Signals erreicht werden.

Bei dem erfindungsgemäßen Verfahren ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Entsprechend dem erfindungsgemäßen Verfahren wird mithilfe des Skalarprodukts rechnerisch der Winkel zwischen den beiden Vektoren bestimmt.

Zur Berechnung des Winkels zwischen den beiden Vektoren mithilfe des Skalarprodukts bedarf es nur eines geringen Rechenaufwands bzw. einer geringen Prozessorleistung.

Entsprechend dem erfindungsgemäßen Verfahren ist vorgesehen, dass der ermittelte Winkel einen vorbestimmten Schwellenwert von 1 bis 5 Grad überschreitet.

Bei einer vorteilhaften Weiterbildung des erfindungsgemäßen Verfahrens wird der Schwellenwert, der größer als Null Grad ist, mit geringer werdender Entfernung des Identifikationsgebers vom Fahrzeug vergrößert. Vorzugsweise wird die Entfernung vorzugsweise über eine Laufzeitmessung zwischen den Signalen, die zwischen Fahrzeug und Identifikationsgeber ausgetauscht werden, bestimmt.

Entsprechend einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch die vorstehenden Maßnahmen kann die Zuverlässigkeit des erfindungsgemäßen Verfahrens zur Autorisierung der Nutzung eines Kraftfahrzeugs zusätzlich verbessert werden.

Neben dem vorteilhaften erfindungsgemäßen Verfahren zur Autorisierung der Nutzung eines Kraftfahrzeugs, ermöglicht die Erfindung die Bereitstellung eines Fahrzeugzugangssystems zur Autorisierung der Nutzung eines Kraftfahrzeugs, wobei dieses an der Ausführung eines erfindungsgemäßen Verfahrens beteiligt ist bzw. ein erfindungsgemäßes Verfahren ausführt.

Bei einer vorteilhaften Weiterbildung des erfindungsgemäßen Fahrzeugzugangssystems ist vorgesehen, dass der Identifikationsgeber ein Funkschlüssel oder ein Smartphone, vorzugsweise mit einer Identifikationsgeber-Softwareanwendung, wie eine sog. App, ist.

Entsprechend einer vorteilhaften Ausgestaltung des erfindungsgemäßen Fahrzeugzugangssystems ist der Identifikationsgeber ein mit einem Rechnerchip versehenes Smartphone, ein mit einem Rechnerchip versehener Funk-Fahrzeugschlüssel oder eine Chipkarte mit Rechnerchip.

Bei einer Ausführungsform des erfindungsgemäßen Fahrzeugzugangssystems weist der Identifikationsgeber einen Sensor zur Bestimmung bzw. Ermittlung eines elektromagnetischen Feldes und/oder der Komponenten des elektromagnetischen Feldes auf, das von einer oder mehreren Fahrzeugantennen im Bereich des Identifikationsgebers erzeugt worden ist.

Die vorstehenden Merkmale des erfindungsgemäßen Fahrzeugzugangssystems ermöglichen es für den Fahrer eine besonders komfortable Nutzung des erfindungsgemäßen Verfahrens zur Autorisierung der Nutzung eines Kraftfahrzeugs bereitzustellen.

Die Erfindung schlägt zudem eine Wegfahrsperre zur Autorisierung der Nutzung eines Kraftfahrzeugs vor, die in vorteilhafter Weise an der Ausführung eines erfindungsgemäßen Verfahrens beteiligt ist bzw. ein erfindungsgemäßes Verfahren ausführt.

Ferner wird ein Kraftfahrzeug vorgeschlagen, bei dem vorgesehen ist, dass in dem Kraftfahrzeug mindestens ein Schritt eines erfindungsgemäßen Verfahrens nach einem der vorstehenden Ansprüche ausgeführt wird.

Schließlich schlägt die Erfindung ein Computerprogrammprodukt zur Steuerung mindestens eines Prozessors vor, der den Ablaut des ertindungsgemäßen Verfahrens bewirkt.

## Patentansprüche

1. Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals unter Verwendung eines winkelauflösenden Magnetfeldsensors,
- ein erster Rechner im Identifikationsgeber, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals,
- der Identifikationsgeber sendet nur dann ein Autorisierungssignal zur Autorisierung der Nutzung des Kraftfahrzeugs an das Kraftfahrzeug, wenn der ermittelte Winkel einen vorbestimmten Schwellenwert überschreitet,
- der Zeitabstand zwischen der Aussendung des ersten Signals durch die erste Fahrzeugantenne und der Aussendung des zweiten Signals durch die zweite Fahrzeugantenne wird zeitlich so kurz, aber verschieden von Null, gewählt,
dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird,
- dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind,
- dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird,
- dass mithilfe des Skalarprodukts rechnerisch der Winkel zwischen den beiden Vektoren bestimmt wird, und
- dass der ermittelte Winkel einen vorbestimmten Schwellenwert von 1 bis 5 Grad überschreitet.

2. Verfahren zur Autorisierung der Nutzung eines Kraftfahrzeugs nach Anspruch 1, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

3. Verfahren zur Autorisierung der Nutzung eines Kraftfahrzeugs nach Anspruch 1 oder 2, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

4. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

5. Verfahren zur Autorisierung der Nutzung eines Kraftfahrzeugs nach einem der vorstehenden Ansprüche, **dadurch gekennzeichnet, dass** der Schwellenwert, der größer als Null Grad ist, mit geringer werdender Entfernung des Identifikationsgebers vom Fahrzeug vergrößert wird, wobei die Entfernung vorzugsweise über eine Laufzeitmessung zwischen den Signalen, die zwischen Fahrzeug und Identifikationsgeber ausgetauscht werden, bestimmt wird.

6. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

7. Fahrzeugzugangssystem zur Autorisierung der Nutzung eines Kraftfahrzeugs, **gekennzeichnet durch** die Ausführung eines Verfahrens nach einem der vorstehenden Ansprüche.

8. Fahrzeugzugangssystem zur Autorisierung der Nutzung eines Kraftfahrzeugs nach Anspruch 7, **dadurch gekennzeichnet, dass** der Identifikationsgeber ein Funkschlüssel oder ein Smartphone, vorzugsweise mit einer Identifikationsgeber-Softwareanwendung, wie eine sog. App, ist.

9. Fahrzeugzugangssystem zur Autorisierung der Nutzung eines Kraftfahrzeugs nach Anspruch 7 oder 8, **dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

10. Fahrzeugzugangssystem zur Autorisierung der Nutzung eines Kraftfahrzeugs nach einem der vorstehenden Ansprüche, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

11. Wegfahrsperre zur Autorisierung der Nutzung eines mit einer ersten und einer zweiten Antenne, einem ersten Rechner und einem Identifikationsgeber, in dem das Kraftfahrzeug geeignet ist, ein Verfahren nach einem der Ansprüche 1 bis 7 auszuführen.

12. Kraftfahrzeug, mit einer ersten und einer zweiten Antenne, einem ersten Rechner und einem Identifikationsgeber, **dadurch gekennzeichnet, dass** das Kraftfahrzeug geeignet ist, ein Verfahren nach einem der Ansprüche 1 bis 7 auszuführen.

13. Computerprogrammprodukt zur Autorisierung der Nutzung eines Kraftfahrzeugs, umfassend Befehle, die bewirken, dass das Fahrzeugzugangssystem des Anspruchs 7, die Verfahrensschritte der Ansprüche 1 bis 6 ausführt.

## Claims

1. Method for authorizing the use of a motor vehicle, in particular a two-wheeled or four-wheeled motor vehicle, which has at least a first and a second antenna, wherein the first antenna and the second antenna are spatially remote from one another, by way of a portable identification transmitter that has an identification transmitter antenna, having the following steps:
- the first vehicle antenna emits a first signal that is received by the identification transmitter antenna,
- the identification transmitter establishes at least one of the spatial components of the first electromagnetic field of the received first signal,
- the second vehicle antenna emits a second signal that is received by the identification transmitter antenna,
- the identification transmitter establishes at least one of the spatial components of the second electromagnetic field of the received second signal using an angle-resolving magnetic field sensor,
- a first computer in the identification transmitter establishes the angle at least between the established spatial component of the first electromagnetic field of the received first signal and the established spatial component of the second electromagnetic field of the received second signal,
- the identification transmitter transmits an authorization signal for authorizing the use of the motor vehicle to the motor vehicle only when the established angle exceeds a predetermined threshold value,
- the time difference between the emission of the first signal by the first vehicle antenna and the emission of the second signal by the second vehicle antenna is selected to be so short in time, but other than zero, that the identification transmitter carried by the driver is substantially not moved as the driver approaches the vehicle, and therefore the establishment of the angle at least between the established spatial component of the first electromagnetic field of the received first signal and the established spatial component of the second electromagnetic field of the received second signal is substantially not falsified or not unusable as a result of the movement of the driver or as a result of the movement, connected therewith, of the identification transmitter,
- that the spatial components, established by the identification transmitter, of the first electromagnetic field of the received first signal are the x, y and z components of the electromagnetic field of a first Cartesian coordinate system,
- that at least one first vector is formed computationally from the x, y and z components, established by the identification transmitter, of the first electromagnetic field of the received first signal and one second vector is formed computationally from the x, y and z components, established by the identification transmitter, of the second electromagnetic field of the received second signal, and their scalar product is formed computationally from these two vectors,
- that the angle between the two vectors is determined computationally with the aid of the scalar product,
- that the established angle exceeds a predetermined threshold value of 1 to 5 degrees.

2. Method for authorizing the use of a motor vehicle according to Claim 1, **characterized in that** the motor vehicle has a further third antenna that is spatially remote from the first and the second antenna, respectively, and **in that**, in the same way, the angle at least between the established spatial component of the first electromagnetic field of the received first signal and the established spatial component of the third electromagnetic field of a third signal emitted by the third antenna and received by the identification transmitter is determined.

3. Method for authorizing the use of a motor vehicle according to Claim 1 or 2, **characterized in that** the spatial components, established by the identification transmitter, of the second electromagnetic field of the received second signal are the x, y and z components of the electromagnetic field, substantially the components with reference to the first Cartesian coordinate system, substantially because the Cartesian coordinate system or reference system underlying the establishment of the components changes spatially only slightly upon slight movements of the identification transmitter in very short time periods between the repeated establishment of the angles.

4. Method for authorizing the use of a motor vehicle according to one of the preceding claims, **characterized in that** the spatial components, established by the identification transmitter, of the third electromagnetic field of the received third signal are the x, y and z components of the electromagnetic field, substantially those of the first Cartesian coordinate system.

5. Method for authorizing the use of a motor vehicle according to one of the preceding claims, **characterized in that** the threshold value, which is greater than zero degrees, is increased as the distance of the identification transmitter from the vehicle decreases, wherein the distance is preferably determined via a propagation time measurement between the signals that are exchanged between vehicle and identification transmitter.

6. Method for authorizing the use of a motor vehicle according to one of the preceding claims, **characterized in that** the first, second and third antenna each transmit on an identical or different frequency in the frequency range of 20 kHz to 140 kHz, in particular on about 125 kHz, in particular in a temporally offset manner.

7. Vehicle access system for authorizing the use of a motor vehicle, **characterized by** the execution of a method according to one of the preceding claims.

8. Vehicle access system for authorizing the use of a motor vehicle according to Claim 7, **characterized in that** the identification transmitter is a radio key or a smartphone, preferably having an identification transmitter software application, such as what is known as an app.

9. Vehicle access system for authorizing the use of a motor vehicle according to Claim 7 or 8, **characterized in that** the identification transmitter is a smartphone provided with a computer chip, a radio vehicle key provided with a computer chip or a chip card having a computer chip.

10. Vehicle access system for authorizing the use of a motor vehicle according to one of the preceding claims, **characterized in that** the identification transmitter has a sensor for determining or establishing an electromagnetic field and/or the components of the electromagnetic field that has been produced by one or more vehicle antennas in the region of the identification transmitter.

11. Immobilizer for authorizing the use of a having a first and a second antenna, a first computer and an identification transmitter, in which the motor vehicle is suitable for executing a method according to one of Claims 1 to 7.

12. Motor vehicle, having a first and a second antenna, a first computer and an identification transmitter, **characterized in that** the motor vehicle is suitable for executing a method according to one of Claims 1 to 7.

13. Computer program product for authorizing the use of a motor vehicle, comprising commands that cause the vehicle access system of Claim 7 to execute the method steps of Claims 1 to 6.

## Revendications

1. Procédé d'autorisation de l'utilisation d'un véhicule automobile, en particulier d'un véhicule automobile à deux ou quatre roues, qui comporte au moins une première et une deuxième antenne, la première antenne et la deuxième antenne étant espacées spatialement l'une de l'autre, au moyen d'un transmetteur d'identification portable qui comporte une antenne de transmetteur d'identification, le procédé comprenant les étapes suivantes :
- la première antenne du véhicule émet un premier signal qui est reçu par l'antenne de transmetteur d'identification,
- le transmetteur d'identification détermine au moins une des composantes spatiales du premier champ électromagnétique du premier signal reçu,
- la deuxième antenne du véhicule émet un deuxième signal qui est reçu par l'antenne de transmetteur d'identification,
- le transmetteur d'identification détermine au moins une des composantes spatiales du deuxième champ électromagnétique du deuxième signal reçu à l'aide d'un capteur de champ magnétique à résolution angulaire,
- un premier calculateur dans le transmetteur d'identification détermine l'angle formé au moins entre la composante spatiale déterminée du premier champ électromagnétique du premier signal reçu et la composante spatiale déterminée du deuxième champ électromagnétique du deuxième signal reçu,
- le transmetteur d'identification n'envoie un signal d'autorisation de l'utilisation du véhicule automobile au véhicule automobile que si l'angle déterminé dépasse une valeur seuil prédéterminée,
- l'intervalle de temps entre l'émission du premier signal par la première antenne du véhicule et l'émission du deuxième signal par la deuxième antenne du véhicule est choisi pour être temporellement court, mais différent de zéro, de façon à ce que le transmetteur d'identification porté par le conducteur ne soit pas dans une large mesure déplacé lorsque le conducteur s'approche du véhicule et donc la détermination de l'angle au moins entre la composante spatiale déterminée du premier champ électromagnétique du premier signal reçu et la composante spatiale déterminée du deuxième le champ électromagnétique du deuxième signal reçu ne soit pas dans une large mesure faussée ou rendue inutilisable à cause du mouvement du conducteur ou du mouvement associé du transmetteur d'identification,
- de façon à ce que les composantes spatiales du premier champ électromagnétique du premier signal reçu, qui sont déterminées par le transmetteur d'identification, soient les composantes x, y et z du champ électromagnétique d'un premier système de coordonnées cartésiennes,
- de façon à former par le calcul au moins un premier vecteur parmi les composantes x, y et z du premier champ électromagnétique du premier signal reçu, déterminées par le transmetteur d'identification, et un deuxième vecteur parmi les composantes x, y et z du deuxième champ électromagnétique, déterminées par le transmetteur d'identification du deuxième signal reçu et à former par le calcul le produit scalaire de ces deux vecteurs,
- de façon à déterminer par le calcul, à l'aide le produit scalaire, l'angle formé entre les deux vecteurs, et
- de façon à ce que l'angle déterminé dépasse une valeur seuil prédéterminée de 1 à 5 degrés.

2. Procédé d'autorisation de l'utilisation d'un véhicule automobile selon la revendication 1, **caractérisé en ce que** le véhicule automobile comporte une troisième antenne supplémentaire qui est espacée spatialement de la première et de la deuxième antenne et **en ce que** l'angle formé entre au moins la composante spatiale déterminée du premier champ électromagnétique du premier signal reçu et la composante spatiale déterminée du troisième champ électromagnétique d'un troisième signal émis par la troisième antenne et reçu par le transmetteur d'identification est déterminée de manière analogue.

3. Procédé d'autorisation de l'utilisation d'un véhicule automobile selon la revendication 1 ou 2, **caractérisé en ce que** les composantes spatiales du deuxième champ électromagnétique du deuxième signal reçu, déterminées par le transmetteur d'identification, sont les composantes x, y et z du champ électromagnétique, dans une large mesure les composantes en référence au premier système de coordonnées cartésiennes, dans une large mesure parce que le système de coordonnées cartésiennes ou le système de référence, sur lequel repose la détermination des composantes, ne varie spatialement que de manière insignifiante dans de très courts intervalles de temps entre les détermination d'angles répétées lors de mouvements insignifiants du transmetteur d'identification.

4. Procédé d'autorisation de l'utilisation d'un véhicule automobile selon l'une des revendications précédentes, **caractérisé en ce que** les composantes spatiales du troisième champ électromagnétique du troisième signal reçu, déterminées par le transmetteur d'identification, sont les composantes x, y et z du champ électromagnétique, dans une large mesure celles du premier système de coordonnées cartésiennes.

5. Procédé d'autorisation de l'utilisation d'un véhicule automobile selon l'une des revendications précédentes, **caractérisé en ce que** la valeur seuil, qui est supérieure à zéro degré, est augmentée à mesure que la distance du transmetteur d'identification au véhicule diminue, la distance étant déterminée de préférence par une mesure de temps de propagation entre les signaux qui sont échangés entre le véhicule et le transmetteur d'identification.

6. Procédé d'autorisation de l'utilisation d'un véhicule automobile selon l'une des revendications précédentes, **caractérisé en ce que** la première, la deuxième et la troisième antenne émettent chacune à une fréquence identique ou différente dans la gamme de fréquence allant de 20 kHz à 140 kHz, en particulier à environ 125 kHz, en particulier avec un décalage temporel.

7. Système d'accès à un véhicule, destiné à autoriser l'utilisation d'un véhicule automobile, **caractérisé par** la mise en œuvre d'un procédé selon l'une des revendications précédentes.

8. Système d'accès à un véhicule, destiné à autoriser l'utilisation d'un véhicule automobile selon la revendication 7, **caractérisé en ce que** le transmetteur d'identification est une radio-clé ou un téléphone intelligent, en particulier pourvu d'une application logicielle de transmetteur d'identification, par exemple ce que l'on appelle une appli.

9. Système d'accès à un véhicule, destiné à autoriser l'utilisation d'un véhicule automobile selon la revendication 7 ou 8, **caractérisé en ce que** le transmetteur d'identification est un téléphone intelligent muni d'une puce informatique, une radio-clé de véhicule munie d'une puce informatique ou une carte à puce munie d'une puce informatique.

10. Système d'accès à un véhicule, destiné à autoriser l'utilisation d'un véhicule automobile selon l'une des revendications précédentes, **caractérisé en ce que** le transmetteur d'identification comporte un capteur destiné à déterminer ou détecter un champ électromagnétique et/ou les composantes du champ électromagnétique qui a été généré par une ou plusieurs antennes de véhicule dans la zone du transmetteur d'identification.

11. Immobilisateur destiné à autoriser l'utilisation d'un comprenant une première et une deuxième antenne, un premier calculateur et un transmetteur d'identification, le véhicule automobile étant apte à mettre en œuvre un procédé selon l'une des revendications 1 à 7.

12. Véhicule automobile, comprenant une première et une deuxième antenne, un premier calculateur et un transmetteur d'identification, **caractérisé en ce que** le véhicule automobile est apte à mettre en œuvre un procédé selon l'une des revendications 1 à 7.

13. Progiciel destiné à autoriser l'utilisation d'un véhicule automobile, ledit progiciel comprenant des instructions amenant le système d'accès à un véhicule selon la revendication 7 à exécuter les étapes de procédé des revendications 1 à 6.
